(19) Europäisches Patentamt
European Patent Office
Office européen des brevets

(11)  **EP 2 075 440 B1**

(12)  **EUROPEAN PATENT SPECIFICATION**

(45) Date of publication and mention
of the grant of the patent:
**30.05.2012   Bulletin 2012/22**

(51) Int Cl.:
*F02C 9/26* (2006.01)        *F02C 9/28* (2006.01)
*F23R 3/26* (2006.01)        *F23R 3/28* (2006.01)

(21) Application number: **07425849.2**

(22) Date of filing: **31.12.2007**

(54) **Method and device for controlling a gas-turbine plant**

Verfahren und Vorrichtung zur Steuerung einer Gasturbinenanlage

Procédé et dispositif pour le contrôle d'une centrale à turbine à gaz

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**01.07.2009   Bulletin 2009/27**

(73) Proprietor: **ANSALDO ENERGIA S.P.A.**
**16152 Genova (IT)**

(72) Inventors:
• **Cacciacarne, Stefano**
**16148 Genova (IT)**
• **De Micheli, Emanuele**
**16152 Genova (IT)**
• **Ferrera, Flavio**
**16131 Genova (IT)**
• **Gatti, Roberta**
**16131 Genova (IT)**

(74) Representative: **D'Angelo, Fabio et al**
**Studio Torta S.p.A.**
**Via Viotti, 9**
**10121 Torino (IT)**

(56) References cited:
**EP-A- 1 199 454        EP-B- 0 790 466**
**GB-A- 2 348 675        US-A- 5 469 700**
**US-A- 6 145 297        US-A1- 2004 255 594**

## Description

The present Invention relates to a device and to a method for controlling a gas-turbine plant.

In particular, the present invention regards a device and a method for controlling a gas-turbine plant that can operate with gas oil. An example of a known plant is disclosed in the document US-A-2004/0255594.

A known type of gas-turbine plant comprises a combustion chamber that can be supplied with gas or gas oil. In particular, the plant comprises a gas supply circuit and a gas-oil supply circuit for the combustion chamber and a device for controlling the gas-turbine plant.

The gas-oil supply circuit comprises a diffusion supply line and a premixing supply line and can operate in a purely diffusion mode or in a mixed diffusion and premixing mode.

Plants of this type present, however, some drawbacks.

In particular, in the steps of activation and deactivation of the mode of operation with gas oil, considerable oscillations of temperature occur in the combustion chamber, which increase the risk of damage to the combustion chamber itself.

Furthermore, in the steps of passage from the diffusion supply mode to the mixed supply mode there occurs a variation in the amount of fuel supplied to the combustion chamber. Said variation is responsible for the instability of the flame in the combustion chamber and the oscillations of the power emitted by the plant.

An aim of the present invention is to provide a device for controlling a gas turbine that is free from the drawbacks of the known art highlighted herein; in particular, an aim of the invention is to provide a control device capable of eliminating the flame instabilities and the oscillations in the power emitted.

In accordance with the above aims, the present invention regards a method and a device for controlling a gas-turbine plant as specified in Claims 1 and 6, respectively.

Further characteristics and advantages of the present invention will emerge clearly from the ensuing description of a non-limiting example of embodiment thereof, with reference to the figures of the annexed drawings, wherein:

- Figure 1 is a schematic representation of a gas-turbine plant comprising a control device according to the present invention;
- Figure 2 is a schematic representation of a detail of the gas-turbine plant of Figure 1;
- Figure 3 is a block diagram of the control device according to the present invention;
- Figure 4 is a flowchart of a first step of the control method according to the present invention;
- Figure 5 is a diagram of the plot of a control function of the control device of Figure 3; and

- Figure 6 is a flowchart of a second step of the control method according to the present invention.

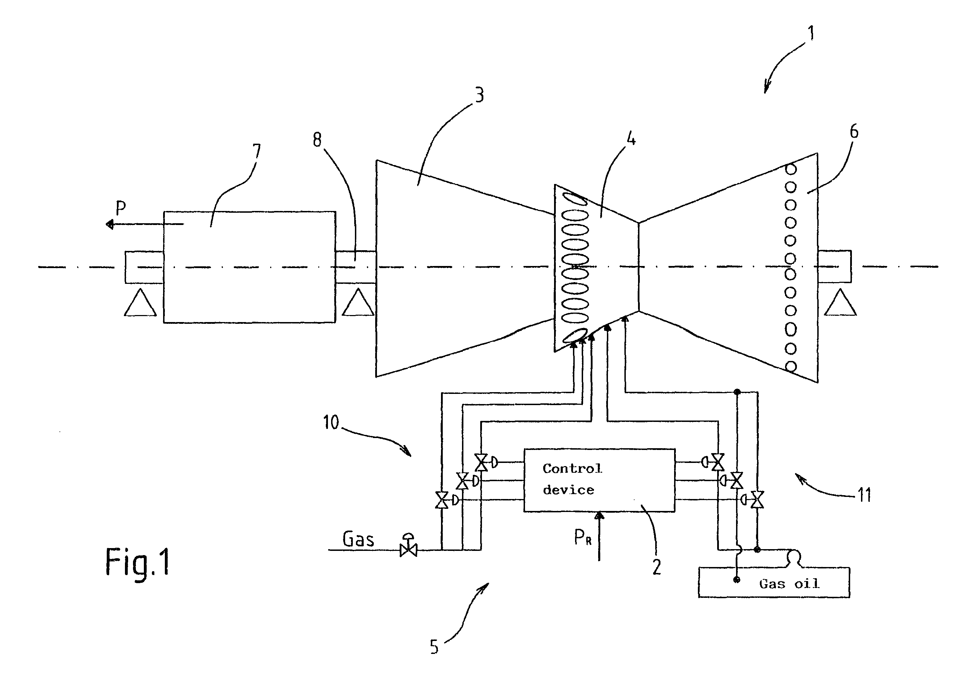

Represented in Figure 1 is a gas-turbine plant 1 for the production of electrical energy comprising a control device 2, a compressor 3, a combustion chamber 4, a supply circuit 5 for supplying the combustion chamber 4, and a turbine 6, which drives a generator 7, which is mounted on the same shaft 8 as the turbine 6 and is designed to generate a power P.

The combustion chamber 4 is preferably of the annular type and can be supplied both with gas oil and with gas. In particular, the combustion chamber 4 comprises a plurality of burners, for example twenty-four, which are supplied by the supply circuit 5.

In the non-limiting example described and illustrated herein, the supply circuit 5 comprises a gas supply circuit 10 and a gas-oil supply circuit 11. A variant of the present invention envisages that the supply circuit 5 comprises just the gas-oil supply circuit.

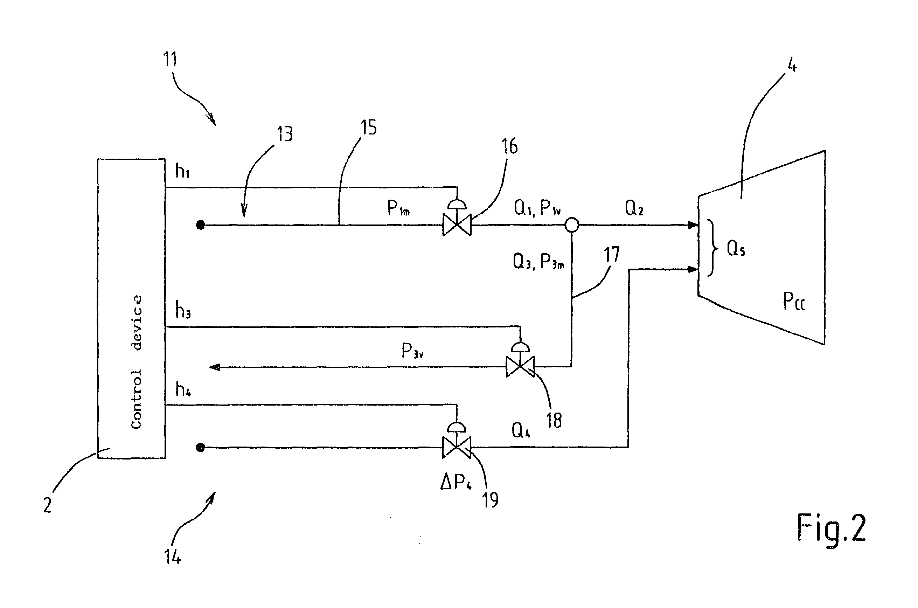

With reference to Figure 2, the gas-oil supply circuit 11 comprises a diffusion supply line 13 and a premixing supply line 14.

The diffusion supply line 13 comprises a delivery duct 15, set along which is a delivery valve 16, and a return duct 17, set along which is a return valve 18.

The delivery valve 16 and the return valve 18 are regulated by the control device 2.

Along the delivery duct 15 flows a delivery diffusion flow rate $Q1$ of gas oil, and the pressure of the gas oil assumes different values. In particular, the pressure upstream of the delivery valve 15 assumes a first value $P1m$, whilst downstream of the delivery valve it assumes a second value $P1v$.

Along the return duct 17 there is a return diffusion flow rate $Q3$ of gas oil, and the pressure of the gas oil assumes different values. In particular, the pressure upstream of the return valve 18 assumes a first value $P3m$, whilst downstream of the return valve 18 it assumes a second value $P3v$.

The combustion chamber 4 is supplied by the diffusion supply line 13 with a diffusion flow rate $Q2$ equal to the difference between the delivery diffusion flow rate $Q1$ and the return diffusion flow rate $Q3$.

As will be described in detail hereinafter, the control device 2 determines a lift $h1$ of the delivery valve 15 and a lift $h3$ of the return valve 18.

Along the premixing supply line 14 there circulates a premixing flow rate $Q4$ of gas oil and there is set a premixing delivery valve 19, across which there is a pressure drop $\Delta P4$.

Also the premixing delivery valve 19 is controlled by the control device 2, which determines a lift $h4$ of the premixing delivery valve 19.

The combustion chamber 4 is thus supplied with a flow rate equal to the diffusion flow rate $Q2$ in the diffusion-only operating mode and with a flow rate equal to the sum of the diffusion flow rate $Q2$ and of the premixing flow rate Q4 in the mixed operating mode.

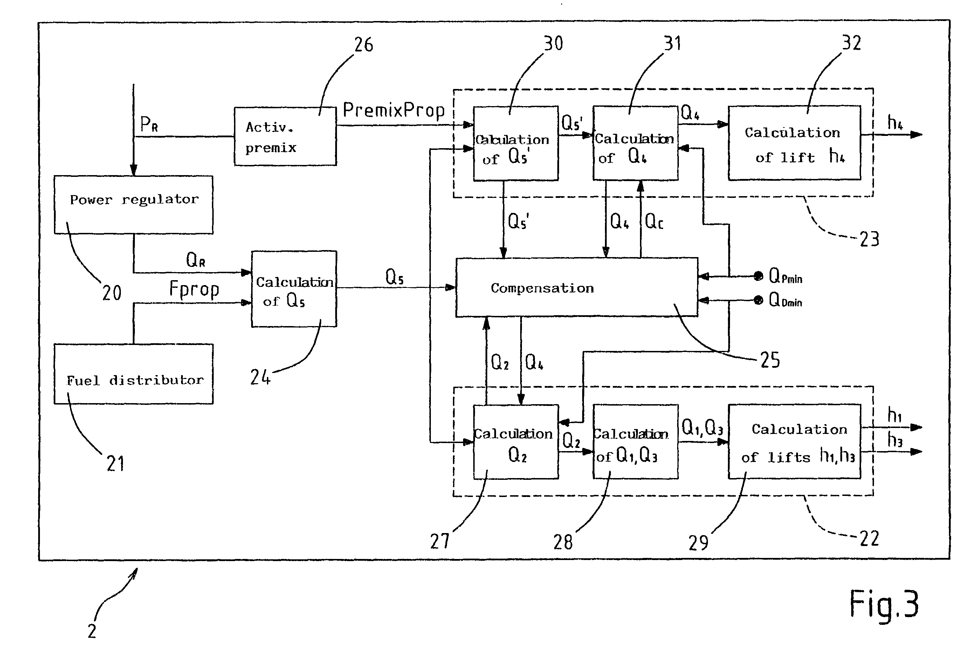

With reference to Figure 3, the control device 2 comprises a power regulator 20, a fuel distributor 21, a diffusion-regulation block 22, and a premixing-regulation block 23.

The power regulator 20, on the basis of a power requirement PR calculates a required flow rate QR.

The fuel distributor 21 regulates the type of fuel used for supplying the combustion chamber 4. In particular, the fuel distributor 21 issues a gas/gas-oil proportion signal Fprop, which is comprised between 0 and 1 and is indicative of the gas supply mode or of the gas-oil supply mode. With Fprop=0 the combustion chamber 4 is supplied only with gas, whereas with Fprop=1 the combustion chamber 4 is supplied only with gas oil. In the steps of transition from the gas-oil supply mode to the gas supply mode, and vice versa, Fprop assumes values comprised between 0 and 1 and the combustion chamber 4 is supplied with gas and with gas oil simultaneously.

The control device 2 moreover comprises a block 24 for calculating a theoretical regulation flow rate Q5 of gas oil to be supplied to the combustion chamber 4, a compensation block 25, connected to the diffusion-regulation block 22 and to the premixing-regulation block 23, and a premixing-activation block 26.

The block 24 for calculating the theoretical flow rate Q5 receives at input the signal Fprop and the required flow rate QR, and calculates the theoretical regulation flow rate Q5 of gas oil to be supplied to the combustion chamber 4. In particular, the block 24 multiplies the required flow rate QR by the signal Fprop. In the case where the signal Fprop is equal to 1, i.e., in the mode of supply with just gas oil, the theoretical regulation flow rate Q5 coincides with the required flow rate QR.

Furthermore, since the required flow rate QR is typically expressed in percentage terms, the block 24 converts the theoretical regulation flow rate Q5 into kg/sec. The theoretical regulation flow rate Q5 thus calculated is supplied to the diffusion-regulation block 22 and to the premixing-regulation block 23.

The diffusion-regulation block 22 determines, on the basis of the theoretical regulation flow rate Q5, the lift h1 of the delivery valve 16 and the lift h3 of the return valve 18 of the diffusion supply line 13. The premixing-regulation block 23 determines, on the basis of the theoretical regulation flow rate Q5, the lift h4 of the premixing delivery valve 19.

The diffusion-regulation block 22 comprises a block 27 for calculating the diffusion flow rate Q2, a block 28 for calculating the delivery diffusion flow rate Q1 and the return diffusion flow rate Q3, and a block 29 for calculating the valve lifts h1 and h3 of the delivery valve 16 and of the return valve 18.

The premixing-regulation block 23 comprises a block 30 for calculating a theoretical premixing flow rate Q5', a block 31 for calculating the premixing flow rate Q4, and a block 32 for calculating the lift h4 of the premixing delivery valve 19.

The block 27 for calculating the diffusion flow rate Q2 receives at input the theoretical regulation flow rate Q5, a minimum diffusion flow rate QDmin and the premixing flow rate Q4 supplied by the compensation block 25 only in given operating conditions, as will be seen in detail hereinafter.

The minimum diffusion flow rate QDmin has a constant value defined a priori in the design stages of the control device 2.

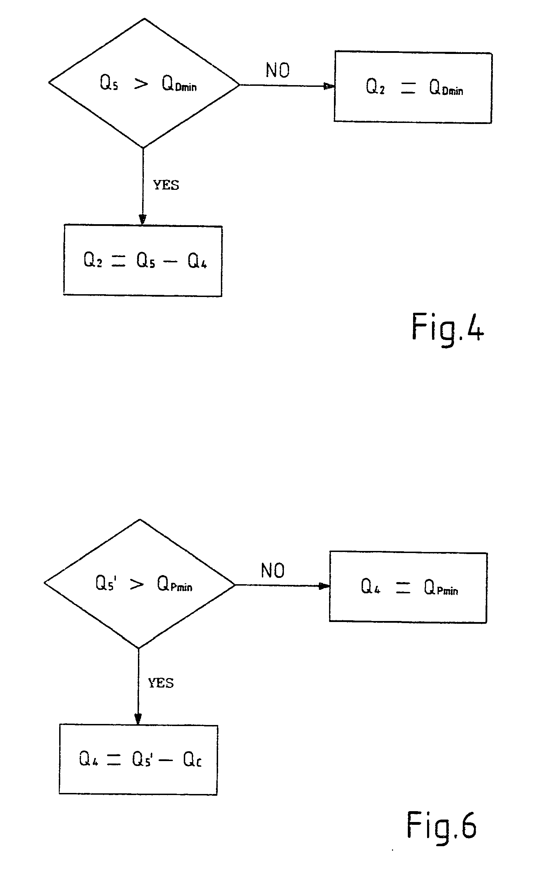

In particular, with reference to the flowchart of Figure 4, block 27 supplies a diffusion flow rate Q2 equal to the minimum diffusion flow rate QDmin if the theoretical regulation flow rate Q5 is lower than the minimum diffusion flow rate QDmin, whilst it calculates the diffusion flow rate Q2, subtracting from the theoretical regulation flow rate Q5 the premixing flow rate Q4 if the theoretical regulation flow rate Q5 is higher than the minimum diffusion flow rate QDmin.

Block 27 is thus configured for guaranteeing a minimum diffusion flow rate QDmin in the diffusion supply line 13. The guarantee of a minimum diffusion flow rate QDmin is particularly advantageous in the steps of starting of the diffusion supply line 13, i.e., in the transition from the gas supply mode to the gas-oil supply mode. During this transition, in fact, the theoretical regulation flow rate Q5 is zero, or almost, and the minimum diffusion flow rate QDmin guarantees a step increase in the flow rate introduced in the combustion chamber 4 substantially equal to the minimum diffusion flow rate QDmin.

With reference to Figure 3, block 28 for calculating the delivery diffusion flow rate Q1 and the return diffusion flow rate Q3 receives at input the value of diffusion flow rate Q2 to be supplied to the combustion chamber 4 and calculates the delivery diffusion flow rate Q1 and the return diffusion flow rate Q3 so as to optimize the level of nebulizing of the gas oil within the combustion chamber 4, albeit guaranteeing the production of the power requirement PR. The level of nebulizing depends substantially upon the pressure drop $\Delta Pcm=Pcc-P1v$ between the combustion chamber 4 and the delivery duct 15 downstream of the delivery valve 16. Block 28 determines a delivery diffusion flow rate Q1 such as to obtain a pressure drop $\Delta Pcm$ that is optimal for nebulizing the gas oil in the combustion chamber 4 according to the power P delivered.

Block 28 calculates the delivery diffusion flow rate Q1 according to a function Q1=f(Q2). The return diffusion flow rate Q3 is consequently calculated as difference between the diffusion flow rate Q2 and the delivery diffusion flow rate Q1 (Q3=Q2-Q1).

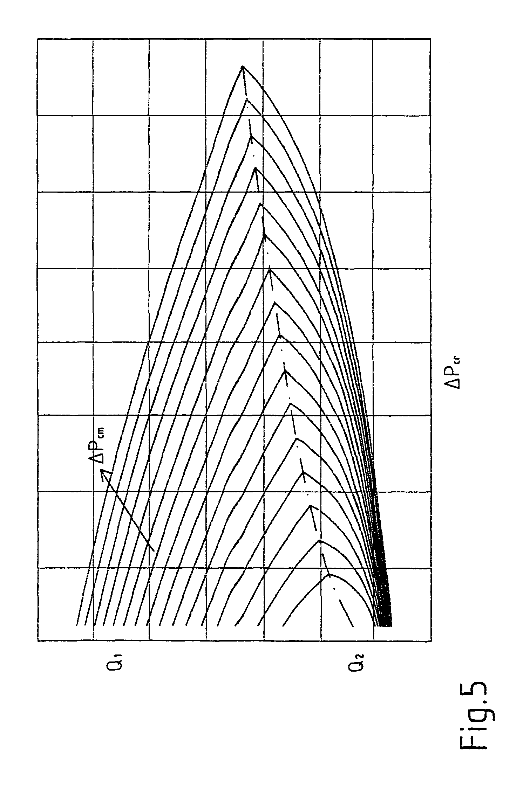

The function Q1=f(Q2) is obtained experimentally and is represented by the diagram of Figure 5. In particular, the function Q1=f(Q2) can be summarized by the following two equations of a second-degree system:

$$\begin{cases} \Delta P_{cm} = \dfrac{a_1 \cdot Q_1^2 + a_2 \cdot Q_1 \cdot Q_2 + a_3 \cdot Q_2^2}{\rho} \\ \Delta P_{cr} = \dfrac{\alpha_1 \cdot Q_1^2 + \alpha_2 \cdot Q_1 \cdot Q_2 + \alpha_3 \cdot Q_2^2}{\rho} \end{cases}$$

where:

- $\Delta$Pcm is the pressure drop between the combustion chamber 4 and the delivery duct 15 downstream of the delivery valve 16 ($\Delta$Pcm=Pcc-P1v);
- $\Delta$Pcr is the pressure drop between the combustion chamber 4 and the return duct 17 of the return valve 18 ($\Delta$Pcr=Pcc-P2m);
- $\rho$ is the density of the gas oil, considered constant.

The diagram of Figure 5 represents on the abscissa the pressure drop $\Delta$Pcr and on the ordinate the delivery diffusion flow rate Q1 and the diffusion flow rate Q2.

Once the curve corresponding to the optimal pressure drop $\Delta$Pcm between the combustion chamber 4 and the delivery duct 15 downstream of the delivery valve 16 has been identified, it is sufficient to know the diffusion flow rate Q2 to obtain the delivery diffusion flow rate Q1 and the pressure drop $\Delta$Pcr between the combustion chamber 4 and the return duct 17 upstream of the return valve 18.

The curve of the diagram designated by a dashed-and-dotted line represents the locus of the points at zero recirculation, where the delivery diffusion flow rate Q1 is equal to the diffusion flow rate Q2, and the return diffusion flow rate Q3 is consequently zero.

The diagram is obtained by measuring experimentally different values of the delivery diffusion flow rate Q1 and the diffusion flow rate Q2 and the corresponding pressure drops $\Delta$Pcm and $\Delta$Pcr so as to obtain a series of working points.

The coefficients a and $\alpha$ are obtained by solving, for each equation of the system given above, a system of three equations with three unknowns calculated in three different working points. The coefficients thus calculated are constants.

With reference to Figure 3, block 29 for calculating the lifts h1 and h3 receives at input the delivery diffusion flow rate Q1, the return diffusion flow rate Q3, and the pressure drops $\Delta$Pcm and $\Delta$Pcr.

Starting from the values of the pressure drops $\Delta$Pcm and $\Delta$Pcr, block 29 calculates the pressure P1v downstream of the delivery valve 16 and the pressure P3m upstream of the return valve 18.

Starting from the delivery diffusion flow rate Q1 and the pressure value P1v, block 29 calculates the lift h1 of the delivery valve 16 for an actuator (not illustrated in the attached figures) of the delivery valve 16.

Likewise, starting from the return diffusion flow rate Q3 and the pressure value P3m, block 29 calculates the lift h3 of the return valve 18 for an actuator (not illustrated in the attached figures) of the return valve 18.

The premixing-activation block 26, on the basis of the value of power requirement PR activates the premixing-regulation block 23 and sends to block 30 for calculating the theoretical premixing flow rate Q5' a premixing-diffusion proportion signal PremixProp comprised between 0 and 1. Basically, the premixing-activation block 26 activates selectively one between a diffusion operating mode and a mixed diffusion and premixing mode. In particular, when the signal PremixProp is zero, the mode of operation is by diffusion, whilst for values of the signal PremixProp different from zero, the mode of operation is mixed. Preferably, the signal PremixProp is comprised between 0 and approximately 0.8 to prevent the combustion chamber 4 from being supplied by just the premixing supply line 14, which is insufficient for keeping the flame in the combustion chamber 4 stable. The diffusion supply line 13 represents in fact a sort of pilot flame for the combustion chamber 4.

Block 30 for calculating the theoretical premixing flow rate Q5' receives at input the signal PremixProp from the premixing-activation block 26 and the theoretical regulation flow rate Q5 from block 24 and calculates the theoretical premixing flow rate Q5' as product between the signal premixProp and the theoretical regulation flow rate Q5.

Block 31 for calculating the premixing flow rate Q4 receives at input the theoretical premixing flow rate Q5', a minimum premixing flow rate QPmin and a diffusion-compensation flow rate Qc coming from the compensation block 25. The diffusion-compensation flow rate Qc, as will be described in detail hereinafter, takes into account the flow rate contribution represented by the diffusion supply line 13.

The minimum premixing flow rate QPmin has a constant value, defined a priori in the design stages of the control device 2.

In particular, with reference to the flowchart of Figure 6, block 31 determines a premixing flow rate Q4 equal to the minimum premixing flow rate QPmin if the theoretical premixing flow rate Q5' is lower than the minimum premixing flow rate QPmin, whereas it determines the premixing flow rate Q4 by subtracting from the theoretical premixing flow rate Q5' the diffusion-compensation flow rate Qc if the theoretical premixing flow rate Q5' is greater than the minimum premixing flow rate QPmin.

Block 31 is thus configured for guaranteeing a minimum premixing flow rate QPmin. The guarantee of a minimum premixing flow rate QPmin proves particularly advantageous in the steps of starting of the premixing supply line 14, i.e., in the transition from the diffusion operating mode to the mixed operating mode. During this transition, in fact, the theoretical premixing flow rate Q5' is zero, or almost, given that signal PremixProp is substantially zero, and the minimum premixing flow rate QPmin guarantees a step increase in the flow rate circulating in the premixing supply line 14 equal to the minimum premixing flow rate QPmin.

The premixing flow rate Q4 thus calculated is then sent to block 32 for calculating the lift h4. Block 32 calculates the lift h4 of the premixing delivery valve 19 starting from the premixing flow rate Q4 and the pressure drop ΔP4 measured across the premixing delivery valve 19.

The lift h4 of the premixing delivery valve 19 will then be supplied to an actuator (not illustrated in the attached figures) of the premixing delivery valve 19.

The compensation block 25 receives at input the diffusion flow rate Q2, the premixing flow rate Q4, the minimum premixing flow rate QPmin, the minimum diffusion flow rate QDmin, the theoretical regulation flow rate Q5, and the theoretical premixing flow rate Q5'.

In particular, the compensation block 25 sends to block 27 for calculating the diffusion flow rate Q2 the premixing flow rate Q4 only when the operation in the mixed mode is active.

The compensation block 25 moreover determines the diffusion-compensation flow rate Qc to be sent to block 31 for calculating the premixing flow rate Q4. In particular, the compensation block 25 determines a diffusion-compensation flow rate Qc zero if the difference between the theoretical regulation flow rate Q5 and the theoretical premixing flow rate Q5' is greater than the minimum diffusion flow rate Qdmin, and, instead, determines a diffusion-compensation flow rate Qc by subtracting the theoretical premixing flow rate Q5' and the minimum diffusion flow rate QDmin from the theoretical regulation flow rate [QC=Q5-(Q5'+QDmin)] if the difference between the theoretical regulation flow rate Q5 and the theoretical premixing flow rate Q5' is less than the minimum diffusion flow rate QDmin.

Thanks to the action of the compensation block 25, during the transition from the diffusion operating mode to the mixed operating mode, the flow rate at input to the combustion chamber 4 does not vary. In this way, the emitted power P does not undergo variations and the stability of the flame in the combustion chamber 4 is moreover guaranteed.

Finally, it is evident that modifications and variations can be made to the device and the method described herein, without thereby departing from the scope of the annexed claims.

**Claims**

1. A method for controlling a gas-turbine plant that can operate with gasoil or with gas and gas oil, comprising the steps of:

    - determining a theoretical regulation flow rate (Q5) of gas oil to be supplied to a combustion chamber (4) of the plant (1) on the basis of a power requirement (PR) for the plant (1);
    - determining a diffusion flow rate (Q2) on the basis of the theoretical regulation flow rate (Q5); and
    - supplying by diffusion the diffusion flow rate (Q2) to the combustion chamber (4); the diffusion flow rate (Q2) being equal to at least a minimum diffusion flow rate (QDmin);
    - activating selectively one between a diffusion operating mode and a mixed diffusion and premixing mode;
    - in the mixed operating mode, determining a theoretical premixing flow rate (Q5') to be supplied with premixing to the combustion chamber (4) on the basis of the theoretical regulation flow rate (Q5);
    - determining a premixing flow rate (Q4) on the basis of the theoretical premixing flow rate (Q5'); and
    - supplying by premixing the premixing flow rate (Q4) to the combustion chamber (4); the premixing flow rate (Q4) being equal to at least a minimum premixing flow rate (QPnin):

the method being **characterized in that** the step of determining the premixing flow rate (Q4) comprises determining a diffusion-compensation flow rate (Qc) and calculating the premixing flow rate (Q4) as the difference between the theoretical premixing flow rate (Q5') and the diffusion-compensation flow rate (Qc); the step of determining a diffusion-compensation flow rate (Qc) comprising subtracting the theoretical premixing flow rate (Q5') and the minimum diffusion flow rate (QDmin) from the theoretical regulation flow rate (Q5), if the difference between the theoretical regulation flow rate (Q5) and the theoretical premixing flow rate (Q5') is less than the minimum diffusion flow rate (QDmin).

2. The method according to Claim 1, **characterized in that** the step of determining the diffusion flow rate (Q2) comprises calculating the difference between the theoretical regulation flow rate (Q5) and the premixing flow rate (Q4).

3. The method according to Claim 1 or 2, **characterized in that** the diffusion-compensation flow rate (Qc) is zero if the difference between the theoretical regulation flow rate (Q5) and the theoretical premixing flow rate (Q5') is greater than the minimum diffusion flow rate (QDmin).

4. The method according to any one of the preceding claims, **characterized in that** the step of supplying by diffusion the diffusion flow rate (Q2) to the combustion chamber (4) comprises the step of regulating a delivery valve (16) and a return valve (18) of a diffusion supply line (13) of the combustion chamber (4); and

the step of regulating the delivery valve (16) and the return valve (18) comprises the step of determining a delivery diffusion flow rate (Q1) and a return diffusion flow rate (Q3) so as to optimize a difference of pressure (ΔPcm) between the combustion chamber (4) and a duct downstream of the delivery valve (16).

5. The method according to Claim 4, **characterized in that** the step cf determining a delivery diffusion flow rate (Q1) and a return diffusion flow rate (Q3) comprises calculating the delivery diffusion flow rate (Q1) on the basis of the diffusion flow rate (Q2) and of the equations:

$$\begin{cases} \Delta P_{cm} = \dfrac{a_1 \cdot Q_1^2 + a_2 \cdot Q_1 \cdot Q_2 + a_3 \cdot Q_2^2}{\rho} \\ \Delta P_{cr} = \dfrac{\alpha_1 \cdot Q_1^2 + \alpha_2 \cdot Q_1 \cdot Q_2 + \alpha_3 \cdot Q_2^2}{\rho} \end{cases}$$

6. A device for controlling a gas-turbine plant that can operate with gas oil or with gas and gas oil, comprising:

- first regulation means (20, 21, 24) for determining a theoretical regulation flow rate (Q5) of gas oil to be supplied to a combustion chamber (4) of the plant (1) cn the basis of a power requirement (PR) for the plant (1);
- second regulation means (27) for determining a diffusion flow rate (Q2) to be supplied by diffusion to the combustion chamber (4) on the basis of the theoretical regulation flow rate (Q5); the diffusion flow rate (Q2) being equal to at least a minimum diffusion flew rate (QDmin);
- activation means (26) for activating selectively one between a diffusion operating mode and a mixed diffusion and premixing mode;
- third regulation means (30) for determining, in the mixed operating mode, a theoretical premixing flow rate (Q5') to be supplied with premixing to the combustion chamber (4) on the basis of the theoretical regulation flow rate (Q5) ; and
- fourth regulation means (31) for determining a premixing flow rate (Q4) to be supplied with premixing to the combustion chamber (4) on the basis of the theoretical premixing flow rate (Q5'); the premixing flow rate (Q4) being equal to at least a minimum premixing flow rate (QPmin)

the device being **characterized in that** it comprises compensation means (25), which are configured for supplying to the second regulation means (27) the premixing flow rate (Q4) in the mixed operating mode and for determining a diffusion-compensation flow rate (Qc) and supplying the diffusion-compensation flow rate (Qc) to the fourth regulation means (31) for calculating the premixing flow rate (Q4); the compensation block (25) being configured fcr determining a diffusion-compensation flow rate (Qc) by subtracting the theoretical premixing flow rate (Q5') and the minimum diffusion flow rate (QDmin) from the theoretical regulation flow rate (Q5) if the difference between the theoretical regulation flow rate (Q5) and the theoretical premixing flow rate (Q5') is less than the minimum diffusion flow rate (QDmin).

7. The device according to Claim 6, **characterized in that** it comprises means (28) for calculating a delivery diffusion flow rate (Q1) of a delivery duct (15) and a return diffusion flow rate (Q3) of a return duct (17) of a diffusion supply line (13) of the combustion chamber (4) so as to optimize a difference of pressure (ΔPcm) between the combustion chamber (4) and the delivery duct (15).

**Patentansprüche**

1. Verfahren zum Steuern einer Gasturbinenanlage, die mit Dieselkraftstoff oder mit Benzin und Dieselkraftstoff arbeiten kann, das die folgenden Schritte umfasst:

- Bestimmen einer theoretischen Regulierungs-Strömungsgeschwindigkeit (Q5) des Dieselkraftstoffs, der einer Brennkammer (4) der Anlage (1) zuzuführen auf der Grundlage einer Leistungsanforderung (PR) für die Anlage (1);
- Bestimmen einer Diffusions-Strömungsgeschwindigkeit (Q2) auf der Grundlage der theoretischen Regulierungs-Strömungsgeschwindigkeit (Q5); und
- Zuführen durch Diffusion der Diffusions-Strömungsgeschwindigkeit (Q2) zu der Brennkammer (4); wobei die Diffusions-Strömungsgeschwindigkeit (Q2) wenigstens gleich einer minimalen Diffusions-Strömungsgeschwindigkeit (QDmin) ist;
- selektives Aktivieren entweder einer Diffusions-Betriebsart oder einer gemischten Diffusions- und Vormisch-Betriebsart;
- in der gemischten Betriebsart Bestimmen einer theoretischen Vormisch-Strömungsgeschwindigkeit (Q5'), die mit dem Vormischen der Brennkammer (4) zuzuführen ist, auf der Grundlage der theoretischen Regulierungs-Strömungsgeschwindigkeit (Q5);
- Bestimmen einer Vormisch-Strömungsgeschwindigkeit (Q4) auf der Grundlage der theoretischen Vormisch-Strömungsgeschwindigkeit (Q5'); und

- Zuführen durch Vormischen der Vormisch-Strömungsgeschwindigkeit (Q4) zu der Brennkammer (4); wobei die Vormisch-Strömungsgeschwindigkeit (Q4) wenigstens gleich einer minimalen Vormisch-Strömungsgeschwindigkeit (QPmin) ist;

wobei das Verfahren **dadurch gekennzeichnet ist, dass** der Schritt des Bestimmens der Vormisch-Strömungsgeschwindigkeit (Q4) das Bestimmen einer Diffusionskompensations-Strömungsgeschwindigkeit (Qc) und das Berechnen der Vormisch-Strömungsgeschwindigkeit (Q4) als den Unterschied zwischen der theoretischen Vormisch-Strömungsgeschwindigkeit (Q5') und der Diffusionskompensations-Strömungsgeschwindigkeit (Qc) umfasst; der Schritt des Bestimmens einer Diffusionskompensations-Strönungsgeschwindigkeit (Qc) das Subtrahieren der theoretischen Vormisch-Strömungsgeschwindigkeit (Q5') und der minimalen Diffusions-Strömungsgeschwindigkeit (QDmin) von der theoretischen Regulierungs-Strömungsgeschwindigkeit (Q5) umfasst, falls der Unterschied zwischen der theoretischen Regulierungs-Strömungsgeschwindigkeit (Q5) und der theoretischen Vormisch-Strömungsgeschwindigkeit (Q5') kleiner als die minimale Diffusions-Strömungsgeschwindigkeit (QDmin) ist.

2. Verfahren nach Anspruch 1, **dadurch gekennzeichnet, dass** der Schritt des Bestimmens der Diffusions-Strömungsgeschwindigkeit (Q2) das Berechnen des Unterschieds zwischen der theoretischen Regulierungs-Strömungsgeschwindigkeit (Q5) und der Vormisch-Strömungsgeschwindigkeit (Q4) umfasst.

3. Verfahren nach Anspruch 1 oder 2, **dadurch gekennzeichnet, dass** die Diffusionskompensations-Strömungsgeschwindigkeit (Qc) null ist, falls der Unterschied zwischen der theoretischen Regulierungs-Strömungsgeschwindigkeit (Q5) und der theoretischen Vormisch-Strömungsgeschwindigkeit (Q5') größer als die minimale Diffusions-Strömungsgeschwindigkeit (QDmin) ist.

4. Verfahren nach einem der vorhergehenden Ansprüche, **dadurch gekennzeichnet**, des Schritt des Zuführens durch Diffusion der Diffusions-Strömungsgeschwindigkeit (Q2) zu der Brennkammer (4) den Schritt des Regelns eines Druckventils (16) und eines Ruckflussventils (18) einer Diffusions-Versorgungsleitung (13) der Brennkammer (4) umfasst; und

der Schritt des Regelns des Druckventils (16) und des Rückflussventils (18) den Schritt des Bestimmens einer Zufuhrdiffusions-Strömungsgeschwindigkeit (Q1) und einer Rückdiffusions-Strömungsgeschwindigkeit (Q3) umfasst, um einen Druckunterschied (ΔPcm) zwischen der Brennkammer (4) und einem stromabwärts des Druckventils (16) befindlichen Rohr zu optimieren.

5. Verfahren nach Anspruch 4, **dadurch gekennzeichnet, dass** der Schritt des Bestimmens einer Zufuhrdiffusions-Strömungsgeschwindigkeit (Q1) und einer Rückdiffusions-Strömungsgeschwindigkeit (Q3) das Berechnen der Zufuhrdiffusions-Strömungsgeschwindigkeit (Q1) auf der Grundlage der Diffusions-Strömungsgeschwindigkeit (Q2) und der folgenden Gleichungen umfasst:

$$
\begin{cases}
\Delta P_{cm} = \dfrac{a_1 \cdot Q_1^2 + a_2 \cdot Q_1 \cdot Q_2 + a_3 \cdot Q_2^2}{\rho} \\[2ex]
\Delta P_{cr} = \dfrac{\alpha_1 \cdot Q_1^2 + \alpha_2 \cdot Q_1 \cdot Q_2 + \alpha_3 \cdot Q_2^2}{\rho}
\end{cases}
$$

6. Vorrichtung zum Steuern einer Gasturbinenanlage, die mit Dieselkraftstoff oder mit Benzin und Dieselkraftstoff arbeiten kann, die umfasst:

    - erste Regulierungsmittel (20, 21, 24) zum Bestimmen einer theoretischen Regulierungs-Strömungsgeschwindigkeit (Q5) des Dieselkraftstoffs, der einer Brennkammer (4) der Anlage (1) zuzuführen ist, auf der Grundlage einer Leistungsanforderung (PR) für die Anlage (1);
    - zweite Regulierungsmittel (27) zum Bestimmen einer Diffusions-Strömungsgeschwindigkeit (Q2), die der Brennkammer (4) durch Diffusion zuzuführen ist, auf der Grundlage der theoretischen Regulierungs-Strömungsgeschwindigkeit (Q5); wobei die Diffusions-Strömungsgeschwindigkeit (Q2) gleich wenigstens einer minimalen Diffusions-Strömungsgeschwindigkeit (QDmin) ist;
    - Aktivierungsmittel (26) zum selektiven Aktivieren entweder einer Diffusions-Betriebsart oder einer gemischten Diffusions- und Vormisch-Betriebsart;
    - dritte Regulierungsmittel (30) zum Bestimmen einer theoretischen Vormisch-Strömungsgeschwindigkeit (Q5'), die mit dem Vormischen der Brennkammer (4) zuzuführen ist, in der gemischten Betriebsart auf der Grundlage der theoretischen Regulierungs-Strömungsgeschwindigkeit (Q5); und
    - vierte Regulierungsmittel (31) zum Bestimmen einer Vormisch-Strömungsgeschwindigkeit (Q4), die mit dem Vormischen der Brennkammer (4) zuzuführen ist, auf der Grundlage der theoretischen Vormisch-Strömungsgeschwindigkeit (Q5'); wobei die Vormisch-Strömungsgeschwindigkeit (Q4) gleich wenigstens einer minimalen Vormisch-Strömungsgeschwindigkeit (QPmin) ist;

wobei Vorrichtung **dadurch gekennzeichnet ist, dass** sie Kompensationsmittel (25) umfasst, die konfiguriert sind, um den zweiten Regulierungsmitteln (27) in der gemischten Betriebsart die Vormisch-Strömungsgeschwindigkeit (Q4) zuzuführen, und um eine Diffusionskompensations-Strömungsgeschwindigkeit (Qc) zu bestimmen und die Diffusionskompensations-Strömungsgeschwindigkeit (Qc) den vierten Regulierungsmitteln (31) zum Berechnen der Vormisch-Strömungsgeschwindigkeit (Q4) zuzuführen; der Kompensationsblock (25) konfiguriert ist, um eine Diffusionskompensations-Strömungsgeschwindigkeit (Qc) durch das Subtrahieren der theoretischen Vormisch-Strömungsgeschwindigkeit (Q5') und der minimalen Diffusions-Strömungsgeschwindigkeit (QDmin) von der theoretischen Regulierungs-Strömungsgeschwindigkeit (Q5) zu bestimmen, falls der Unterschied zwischen der theoretischen Regulierungs-Strömungsgeschwindigkeit (Q5) und der theoretischen Vormisch-Strömungsgeschwindigkeit (Q5') kleiner als die minimale Diffusions-Strömungsgeschwindigkeit (QDmin) ist.

7. Vorrichtung nach Anspruch 6, **dadurch gekennzeichnet, dass** sie Mittel (28) zum Berechnen einer Zufuhrdiffusions-Strömungsgeschwindigkeit (Q1) eines Zufuhrrohrs (15) und einer Rückdiffusions-Strömungsgeschwindigkeit (Q3) eines Rücklaufrohrs (17) einer Diffusions-Versorgungsleitung (13) der Brennkammer (4) umfasst, um einen Druckunterschied (ΔPcm) zwischen der Brennkammer (4) und dem Zufuhrrohr (15) zu optimieren.

**Revendications**

1. Procédé de commande d'une installation à turbine à gaz qui peut fonctionner avec le gasoil ou avec le gaz et le gasoil, comprenant les étapes qui consistent :

à déterminer un débit de régulation théorique (Q5) de gasoil à alimenter à une chambre de combustion (4) de l'installation (1) sur la base d'une puissance requise (PR) pour l'installation (1) ;
à déterminer un débit de diffusion (Q2) sur la base du débit de régulation théorique (Q5) ; et
à alimenter par diffusion le débit de diffusion (Q2) à la chambre de combustion (4) ; le débit de diffusion (Q2) étant égal à au moins un débit de diffusion minimal (QDmin) ;
à activer sélectivement l'un d'un mode de fonctionnement par diffusion et d'un mode mixte de prémélange et de diffusion ;
à déterminer, dans le mode de fonctionnement mixte, un débit de prémélange théorique (Q5') à alimenter avec prémélange à la chambre de combustion (4) sur la base du débit de régulation théorique (Q5) ;
à déterminer un débit de prémélange (Q4) sur la base du débit de prémélange théorique (Q5') ; et
à alimenter par prémélange le débit de prémélange (Q4) à la chambre de combustion (4) ; le débit de prémélange (Q4) étant égal à au moins un débit de prémélange minimal (QPmin) ;
le procédé étant **caractérisé en ce que** l'étape de détermination du débit de prémélange (Q4) comprend le fait de déterminer un débit de compensation de diffusion (Qc) et de calculer le débit de prémélange (Q4) comme étant la différence entre le débit de prémélange théorique (Q5') et le débit de compensation de diffusion (Qc) ;
l'étape de détermination d'un débit de compensation de diffusion (Qc) comprenant le fait de soustraire le débit de prémélange théorique (Q5') et le débit de diffusion minimal (QDmin) du débit de régulation théorique (Q5), si la différence entre le débit de régulation théorique (Q5) et le débit de prémélange théorique (Q5') est inférieure au débit de diffusion minimal (QDmin).

2. Procédé selon la revendication 1, **caractérisé en ce que** l'étape de détermination du débit de diffusion (Q2) comprend le fait de calculer la différence entre le débit de régulation théorique (Q5) et le débit de prémélange (Q4).

3. Procédé selon la revendication 1 ou 2, **caractérisé en ce que** le débit de compensation de diffusion (Qc) est nul si la différence entre le débit de régulation théorique (Q5) et le débit de prémélange théorique (Q5') est supérieure au débit de diffusion minimal (QDmin).

4. Procédé selon l'une quelconque des revendications précédentes, **caractérisé en ce que** l'étape d'alimentation par diffusion du débit de diffusion (Q2) à la chambre de combustion (4) comprend l'étape qui consiste à régler une soupape de refoulement (16) et une soupape de retour (18) d'une ligne (13) d'alimentation par diffusion de la chambre de combustion (4) ; et
l'étape de réglage de la soupape de refoulement (16) et de la soupape de retour (18) comprend l'étape qui consiste à déterminer un débit de diffusion de refoulement (Q1) et un débit de diffusion de retour (Q3) de manière à optimiser une différence de pression (ΔPcm) entre la chambre de combustion (4) et un conduit en aval de la soupape de refoulement (16).

**5.** Procédé selon la revendication 4, **caractérisé en ce que** l'étape de détermination d'un débit de diffusion de refoulement (Q1) et d'un débit de diffusion de retour (Q3) comprend le fait de calculer le débit d'écoulement de diffusion de refoulement (Q1) sur la base du débit de diffusion (Q2) et des équations :

$$\begin{cases} \Delta P_{cm} = \dfrac{a_1 \cdot Q_1^2 + a_2 \cdot Q_1 \cdot Q_2 + a_3 \cdot Q_2^2}{\rho} \\ \Delta P_{cr} = \dfrac{\alpha_1 \cdot Q_1^2 + \alpha_2 \cdot Q_1 \cdot Q_2 + \alpha_3 \cdot Q_2^2}{\rho} \end{cases}$$

**6.** Dispositif de commande d'une installation à turbine à gaz qui peut fonctionner avec le gasoil ou avec le gaz et le gasoil comprenant :

un premier moyen de régulation (20, 21, 24) permettant de déterminer un débit de régulation théorique (Q5) de gasoil à alimenter à une chambre de combustion (4) de l'installation (1) sur la base d'une puissance requise (PR) pour l'installation (1) ;

un deuxième moyen de régulation (27) permettant de déterminer un débit de diffusion (Q2) à alimenter par diffusion à la chambre de combustion (4) sur la base du débit de régulation théorique (Q5) ; le débit de diffusion (Q2) étant égal à au moins un débit de diffusion minimal (QDmin) ;

un moyen d'activation (26) permettant d'activer sélectivement l'un d'un mode de fonctionnement par diffusion et d'un mode mixte de prémélange et de diffusion ;

un troisième moyen de régulation (30) permettant de déterminer, dans le mode de fonctionnement mixte, un débit de prémélange théorique (Q5') à alimenter avec prémélange à la chambre de combustion (4) sur la base du débit de régulation théorique (Q5) ; et

un quatrième moyen de régulation (31) permettant de déterminer un débit de prémélange (Q4) à alimenter avec prémélange à la chambre de combustion (4) sur la base du débit de prémélange théorique (Q5') ; le débit de prémélange (Q4) étant égal à au moins un débit de prémélange minimal (QPmin)

le dispositif étant **caractérisé en ce qu'**il comprend des moyens de compensation (25), qui sont configurés pour alimenter au deuxième moyen de régulation (27) le débit de prémélange (Q4) dans le mode de fonctionnement mixte et pour déterminer un débit de compensation de diffusion (Qc) et pour alimenter le débit de compensation de diffusion (Qc) au quatrième moyen de régulation (31) pour calculer le débit de prémélange (Q4) ; le bloc de compensation (25) étant configuré pour déterminer un débit de compensation de diffusion (Qc) en soustrayant le débit de prémélange théorique (Q5') et le débit de diffusion minimal (QDmin) du débit de régulation théorique (Q5) si la différence entre le débit de régulation théorique (Q5) et le débit de prémélange théorique (Q5') est inférieure au débit de diffusion minimal (QDmin).

**7.** Dispositif selon la revendication 6, **caractérisé en ce qu'**il comprend un moyen (28) pour calculer un débit de diffusion de refoulement (Q1) d'un conduit de refoulement (15) et un débit de diffusion de retour (Q3) d'un conduit de retour (17) d'une ligne d'alimentation par diffusion (13) de la chambre de combustion (4) de manière à optimiser une différence de pression (ΔPcm) entre la chambre de combustion (4) et le conduit de refoulement (15).

Fig.1

Fig.2

$P_R$

Activ. premix — 26

PremixProp

Power regulator — 20

$Q_R$

Fprop

Fuel distributor — 21

Calculation of $Q_5$ — 24

$Q_5$

Calculation of $Q_5'$ — 30

$Q_5'$

Calculation of $Q_4$ — 31

$Q_4$

Calculation of lift $h_4$ — 32

$h_4$

23

$Q_5'$

$Q_4$ $Q_c$

Compensation — 25

$Q_{Pmin}$

$Q_{Dmin}$

$Q_2$ $Q_4$

Calculation $Q_2$ — 27

$Q_2$

Calculation of $Q_1, Q_3$ — 28

$Q_1, Q_3$

Calculation of lifts $h_1, h_3$ — 29

$h_1$

$h_3$

22

2

Fig.3

EP 2 075 440 B1

$$Q_S > Q_{Dmin}$$

NO → $$Q_2 = Q_{Dmin}$$

YES ↓

$$Q_2 = Q_S - Q_4$$

Fig.4

$$Q_S' > Q_{Pmin}$$

NO → $$Q_4 = Q_{Pmin}$$

YES ↓

$$Q_4 = Q_S' - Q_C$$

Fig.6

Fig.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040255594 A